# EUROPÄISCHE PATENTSCHRIFT

(11) **EP 2 545 464 B1**
(45) Veröffentlichungstag und Bekanntmachung des Hinweises auf die Patenterteilung: **31.07.2019**
(21) Anmeldenummer: 11707851.9
(22) Anmeldetag: 10.03.2011
(51) Int. Cl.: G06F 16/11, G06F 21/62, G06F 11/14

(54) **VERFAHREN ZUR HERSTELLUNG UND VERWALTUNG EINES GROßVOLUMIGEN LANGZEITARCHIVS**
METHOD FOR PRODUCING AND MANAGING A LARGE-VOLUME LONG-TERM ARCHIVE
PROCÉDÉ DE CRÉATION ET DE GESTION D'UNE ARCHIVE LONGUE DURÉE DE GRAND VOLUME

(30) Priorität: 12.03.2010 DE 102010011344
(43) Veröffentlichungstag der Anmeldung: 16.01.2013
(73) Patentinhaber: Artec Computer GmbH, 61184 Karben (DE)
(72) Erfinder: ARTISHDAD, Jerry John, 61185 Karben (DE); HETT, Christian, 61194 Niddatal (DE)
(74) Vertreter: Dr. Meyer-Dulheuer & Partners LLP
(86) Internationale Anmeldenummer: PCT/EP2011/053637
(87) Internationale Veröffentlichungsnummer: WO 2011/110639

(56) Entgegenhaltungen:
- WO-A1-2005/046149
- WO-A2-2004/061590
- Neuroth, H. et al: "nestor Handbuch - Eine kleine Enzyklopädie der digitalen Langzeitarchivierung Version 2.0 - Kapitel 4: Das Referenzmodell OAIS - Open Archival Information System", , Juni 2009 (2009-06), Seiten 4:1-4:14, XP002636477, Gefunden im Internet: URL:http://nestor.sub.uni-goettingen.de/ha ndbuch/artikel/nestor_handbuch_artikel_368 .pdf [gefunden am 2011-05-11]
- DOUGLIS F ET AL: "Application-specific delta-encoding via resemblance detection", PROCEEDINGS OF THE USENIX ANNUAL TECHNICAL CONFERENCE, XX, XX, 9. Juni 2003 (2003-06-09), Seiten 113-126, XP002404753,
- KULKARNI P ET AL: "REDUNDANCY ELIMINATION WITHIN LARGE COLLECTIONS OF FILES", PROCEEDINGS OF THE USENIX ANNUAL TECHNICAL CONFERENCE, XX, XX, 1. Januar 2004 (2004-01-01), Seiten 59-72, XP009068018,
- JERMAN BLAZIC ET AL: "Long-term trusted preservation service using service interaction protocol and evidence records", COMPUTER STANDARDS AND INTERFACES, ELSEVIER SEQUOIA. LAUSANNE, CH, Bd. 29, Nr. 3, 2. Februar 2007 (2007-02-02), Seiten 398-412, XP005871193, ISSN: 0920-5489, DOI: DOI:10.1016/J.CSI.2006.06.004
- Neuroth, N. et al: "nestor Handbuch - Eine kleine Enzyklopädie der digitalen Langzeitarchivierung Version 2.0 - Kapitel 12: Technischer Workflow", , Juni 2009 (2009-06), Seiten 12:1-12:26, XP002636478, Gefunden im Internet: URL:http://nestor.sub.uni-goettingen.de/ha ndbuch/artikel/nestor_handbuch_artikel_323 .pdf [gefunden am 2011-05-12]
- Neuroth, H. et al: "nestor Handbuch - Eine kleine Enzyklopädie der digitalen Langzeitarchivierung Version 2.0 - Kapitel 5:Vertrauenswürdigkeit von digitalen Langzeitarchiven", , Juni 2009 (2009-06), Seiten 5:1-5:27, XP002636479, Gefunden im Internet: URL:http://nestor.sub.uni-goettingen.de/ha ndbuch/artikel/nestor_handbuch_artikel_365 .pdf [gefunden am 2011-05-12]
- Neuroth, H. et al: "nestor Handbuch - Eine kleine Enzyklopädie der digitalen Langzeitarchivierung Version 2.0 - Kapitel 17: Vorgehensweise für ausgewählte Objekttypen", , Juni 2009 (2009-06), Seiten 17:1-17:144, XP002636480, Gefunden im Internet: URL:http://nestor.sub.uni-goettingen.de/ha ndbuch/artikel/nestor_handbuch_artikel_302 .pdf [gefunden am 2011-05-12]
- Fey, W.: "Integration einer Archivierungslösung in Domono Web Access (iNotes) - Ein Praxisbericht", , 23. November 2004 (2004-11-23), XP002636481, Gefunden im Internet: URL:http://ebf.de/w4/de/ebf.nsf/dx/ebf_DNU G_LangzeitArchivierung.pdf/$file/ebf_DNUG_ LangzeitArchivierung.pdf [gefunden am 2011-05-11]
- KORN AT&T LABS J MACDONALD UC BERKELEY J MOGUL HEWLETT-PACKARD COMPANY K VO AT&T LABS D: "The VCDIFF Generic Differencing and Compression Data Format; rfc3284.txt", IETF STANDARD, INTERNET ENGINEERING TASK FORCE, IETF, CH, 1. Juni 2002 (2002-06-01), XP015009062, ISSN: 0000-0003

## Beschreibung

Die vorliegende Erfindung betrifft ein Verfahren zur Herstellung und Verwaltung eines großvolumigen Langzeitarchivs, das aus einem Archivdatenspeicher und einer Verwaltungsdatei besteht. Bei dem erfindungsgemäßen Verfahren werden Archivdaten in einer Containerdatei ausgelagert, so dass die Rechtsgültigkeit der Daten durch eine qualifizierte Signierung erhalten bleibt.

Mit dem Voranschreiten des "papierlosen Büros" und dem immer häufiger auftretenden Umstand, dass Dokumente, für die im geschäftlichen oder auch privaten Umfeld eine rechtliche Aufbewahrungsfrist von 30 Jahren und mehr besteht, nicht mehr oder nicht mehr ausschließlich in gedruckter Form vorliegen, sondern in Form von elektronischen Daten, besteht ein immer größerer Bedarf an einer rechtssicheren Archivierungsmöglichkeit der anfallenden Daten. Mit dem exponentiellen Wachstum elektronischer Information wachsen die Probleme der langfristigen Aufbewahrung, obwohl moderne Softwaretechnologien wesentlich besser geeignet sind, Informationen zu verwalten, als dies auf herkömmliche Weise mit Papier und Aktenordnern möglich ist. Da Dokumente in der elektronischen Form leicht veränderbar sind, muss durch Maßnahmen sicher gestellt werden, dass sich die archivierten Daten im Originalzustand befinden. Durch den Einsatz elektronischer Signaturen erhalten elektronische Dokumente den gleichen Rechtscharakter wie manuell unterzeichnete Schriftstücke.

Der Gesetzgeber hat strenge Auflagen daran geknüpft, dass solche Dokumente gerichtsverwertbare Beweise darstellen. Mit dem Signaturgesetz (SigG) und der Signaturverordnung (SigV) hat der deutsche Gesetzgeber die Richtlinie 1999/93/EG ("Signaturrichtlinie") der europäischen Union umgesetzt, die die Verwendung elektronischer Signaturen regelt. Demgemäß gilt ein mit einer qualifizierten elektronischen Signatur versehenes elektronisches Dokument als der Schriftform gleichgestellt. Die qualifizierte elektronische Signatur hat weitestgehend die gleiche Rechtswirkung wie die handschriftliche Unterschrift. Somit lassen sich auf diese Weise signierte Dokumente wie z. B. Emails oder elektronische Rechnungen vor Gericht wie ihre Gegenstücke auf Papier als Beweise einsetzen. Zur Archivierung der Dateien können die Signaturdateien entweder getrennt von der Originaldatei aufbewahrt oder an diese angehängt werden.

Unter elektronischer Langzeitarchivierung bezeichnet man die Aufbewahrung elektronischer Informationen über einen Zeitraum, der länger als zehn Jahre ist. Hierfür wurden Archivsysteme entwickelt, die aus Datenbanken, Archivsoftware und Speichersystemen bestehen. Diese Systeme basieren auf dem Ansatz, über eine Referenzdatenbank mit den Verwaltungs- und Indexkriterien auf einen externen Speicher zu verweisen, in dem die Daten ausgelagert sind. Somit ist es möglich, eine große Menge an Informationen in separate Archivspeicher auszulagern.

Herkömmliche elektronische Archive haben jedoch den Nachteil, insbesondere wenn es sich um eine sehr große Anzahl von (kleinen) Archivdaten handelt, dass Suchvorgänge nach einzelnen Archivdaten oder das Filtern der Daten nach speziellen Kriterien sehr langwierig gestaltet sind. Zusätzlich können diese Archivdaten nach einiger Zeit einen großen Speicherplatz belegen, so dass eine Speicherreduzierung wünschenswert ist, wobei eine qualifizierte Signatur erhalten bleibt, damit die Dokumente weiterhin als gerichtsverwertbare Beweise dienen können. Zusätzlich ist es von Vorteil, wenn die Daten bei einer Rekonstruktion bitgenau wiederhergestellt werden können. Die technische Aufgabe der vorliegenden Erfindung ist demnach die Bereitstellung eines Verfahrens zur Herstellung und Verwaltung eines großvolumigen Langzeitarchivs, das eine Verringerung des Speicherplatzbedarfes und eine Unveränderbarkeit der Daten erlaubt, so dass diese bitgenau wiederhergestellt werden können. Zusätzlich soll eine Möglichkeit gegeben werden, eine große Menge an Daten innerhalb kürzester Zeit nach bestimmten Parametern zu durchsuchen.

Gelöst wird die Aufgabe durch das erfindungsgemäße Verfahren zur Verwaltung eines großvolumigen Langzeitarchivs, das aus einem Archivdatenspeicher und einer Verwaltungsdatenbank besteht. Hierbei werden die Archivdaten in einer Containerdatei zusammengefasst, in welcher eine Unveränderbarkeit dieser Daten gewährleistet ist. Es ist somit nicht mehr möglich, einzelne Dateien zu löschen oder zu verändern und die qualifizierte Signatur der jeweiligen Dateien bleibt erhalten. Durch einen Deduplizierungs-Mechanismus werden mehrfach vorhandene Dateien erkannt und durch Verweise miteinander verknüpft, wobei die Daten bitgenau wiederhergestellt werden können. Indices erlauben eine schnelle Suchfunktion innerhalb der Containerdateien. Somit ist es auch möglich, großvolumige Langzeitarchive, die aus einer Vielzahl von einzelnen Dateien zusammengesetzt sind, effizient zu verwalten.

So ist aus dem Nestor Handbuch von H. Neuroth et.al. "Eine kleine Enzyklopädie der digitalen Langzeitarchivierung Version 2.0" bereits das Open Arichval Information System - OAIS bekannt, das ein dynamisches, erweiterungsfähiges Archivsystem beschreibt. Danach sollen Dokumente archiviert werden, weil ihre grundsätzliche Lesbarkeit gefährdet ist. Die Dokumente werden also gesichert und nicht gelöscht.

Ganz im Gegensatz dazu werden in der Vorhergehenden Erfindung bestimmte gespeicherte Daten aus Platzgründen gelöscht oder vernichtet. Eine rechtssichere Archivierung für eine Langzeitarchivierung, wie sie Gegenstand der vorliegenden Erfindung ist, wird in dem vorstehend genannten Nestor Handbuch gerade nicht offenbart.

Aus der WO 2004/061590 A2 ist weiterhin ein Verfahren zur Deduplizierung von doppelt im Archiv vorhandenen Dokumenten bekannt, die getaggt werden, aber in der jeweiligen Suche nicht doppelt gezeigt werden, wodurch die Archiveffizienz gesteigert wird. Damit unterscheidet sich dieses Verfahren deutlich von der hier beschriebenen Erfindung.

Im Einzelnen sieht das erfindungsgemäße Verfahren folgendermaßen aus: Zunächst werden die Archivdaten anhand vorgegebener Merkmale selektiert. Diese selektierten Archivdaten werden daraufhin aus dem Archivdatenspeicher in eine eigenständige Archivdatendatei ausgelagert und anschließend aus dem Archivdatenspeicher gelöscht. Zusätzlich werden die Indices der selektierten Archivdaten aus der Verwaltungsdatenbank in eine eigenständige Datenbank ausgelagert und anschließend aus der Verwaltungsdatenbank gelöscht. Danach wird die eigenständige Archivdatendatei mit der eigenständigen Datenbankdatei in einer Containerdatei zusammengefasst. Als weiterer Schritt werden die Einträge in der Containerdatei durch Bitmustervergleich der Einträge und das Ersetzen von gleichen Mustern durch Verweise auf die entsprechenden Einträge in der Datenbank dedupliziert.

Vorteilhaft kann auch eine Abwandlung des beschriebenen Verfahrens dahingehend sein, dass die ausgelagerten Daten nicht sofort aus dem Archivdatenspeicher gelöscht werden, sondern zuvor nach Selektion anhand von weiteren Merkmalen in einen oder mehrere weitere Containerdateien ausgelagert werden, wobei die neuen Selektionen sowohl Untermengen der ersten Selektion sein können als auch neue Archivdaten beinhalten können, und erst nach Abschluss sämtlicher Auslagerungsvorgänge alle ausgelagerten Archivdaten gelöscht werden. Dadurch lassen sich mehrere Containerdateien zu bestimmen Themen erstellen, die sich aus überschneidenden Datenmengen zusammensetzen, also beispielsweise alle Daten eines Jahrgangs oder einer Abteilung und sämtliche Daten eines bestimmten Mitarbeiters.

Für den Fall, dass sich nach erfolgter Löschung der ausgelagerten Archivdaten aus dem Archivdatenspeicher noch der Bedarf ergibt, bestimmte ausgelagerte Archivdaten noch in weitere Container einzubinden, ist es notwendig, die Daten aus dem Container wieder in den aktiven Archivdatenspeicher zu reimportieren. Es ist daher vorteilhaft, wenn die Verwaltungsfunktionen der Archivlösung auch über eine entsprechende Funktion zum Reimport einzelner Datensätze aus Containern verfügen.

Ebenso kann es z. B. beim Ausscheiden eines Mitarbeiters vorgeschrieben sein, dass gewisse Daten dieses Mitarbeiters nach einer bestimmten Zeit zu löschen sind. In den ausgelagerten Containerdateien ist dies jedoch nicht so ohne weiteres möglich. Hierzu muss dann der gesamte Container, der die betreffenden Daten enthält, wieder in den Archivdatenspeicher reimportiert werden. Danach können die fraglichen Daten gelöscht und der Rest der importierten Daten wieder in einen Container ausgelagert werden. Vorzugsweise geschieht dies über eine gesonderte Verwaltungsfunktion der Archivlösung. Es ist jedoch auch denkbar, diese spezifische Löschaufgabe von einer getrennten Software ohne Reimport in den normalen Archivdatenspeicher erledigen zu lassen. Dadurch würde das Datenarchiv nicht belastet und der Löschvorgang könnte in einem temporären Archiv schneller durchgeführt werden. Außerdem entfiele die Notwendigkeit, die verbliebenen Daten vor dem erneuten Auslagern in eine Containerdatei zu selektieren. Voraussetzung ist dabei natürlich, dass die Zusatzsoftware über die gleichen Schlüssel wie die Verwaltungssoftware des Archivdatenspeichers verfügt, um die Containerdaten ent- und wieder verschlüsseln zu können. Aus sicherheitstechnischen Gesichtspunkten ist daher die erstgenannte Löschmethode zu bevorzugen.

Wenn es sich bei den Archivdaten um Emails mit MIME (*Multipurpose Internet Mail Extensions*)-kodierten Anhängen handelt, werden mehrfach vorhandene Anhänge derart dedupliziert, dass die MIME-Kodierung bitgenau wiederhergestellt werden kann. Bei der Verarbeitung einer Email ist es möglich, dass sich das Bitmuster beispielsweise einer Base64-Kodierung dadurch ändert, dass Leerzeichen, Zeilenwechsel oder ganze Leerzeilen eingefügt oder entfernt werden, wodurch die kodierte Datei jedoch nicht verändert wird, da Base64-kodierte Inhalte beliebig umgebrochen werden können. Um zu gewährleisten, dass diese Originalmail trotz erfolgter Deduplizierung und Speicherung im um den Faktor 4/3 weniger Speicherplatz benötigenden, besser komprimierbaren Binärformat bitgetreu wiederhergestellt werden kann, wird die Kodierung Zeile für Zeile auf Abweichungen von der Normalform überprüft und, die Zeilenlänge gespeichert und die Rekonstruktionsinformation für jeden deduplizierten Anhang gespeichert.

Dieses Verfahren der Deduplizierung bei der Archivierung mit der Möglichkeit der bitgenauen Wiederherstellung der Anhänge kann auch bei einer Archivierung ohne den Einsatz von Containerdateien eingesetzt werden und trägt ganz wesentlich zur Konformität eines Archivs zu den Vorschriften des Signaturgesetzes bzw. der Signaturverordnung bei. Dementsprechend wird das Verfahren konsequenter Weise auch bei dem Verfahren mit Containerdateien angewendet, da auch hier die Aufgabe der Erfindung neben der Entlastung der Mail- und Archivserver in einer Verbesserung der Konformität des Archivs zu den rechtlichen Bestimmungen besteht.

Bei einer vorherigen Dekodierung von Dateianhängen lassen sich zwar nach der Deduplizierung die originalen Dateianhänge den einzelnen Emails beim Auslesen aus dem Archiv wieder zuordnen und auch in der entsprechenden Kodierung wieder anhängen, die wiederhergestellte Email wird jedoch nicht zwangsläufig bitgenau der ursprünglich archivierten Email entsprechen, da Abweichungen von der Standardform der Kodierung nicht berücksichtigt werden können. Das erfindungsgemäße Verfahren berücksichtigt diese Abweichungen jedoch und erlaubt dadurch die bitgenaue Wiederherstellung der Originalmail. Desweiteren erhält das erfindungsgemäße Verfahren alle Header der Dateianhänge sowie alle weiteren Zwischen- und Trennzeilen bitgenau und ändert auch nicht die Kodierung der Dateianhänge z. B. zwischen Quoted Printable und Base64 ab. Lediglich Base64-kodierte Anhänge werden so im Container abgelegt, dass durch Speichern der Zeilenlänge sowie jeder Abweichung von der Normalform zusammen mit dem Verweis auf den Dateianhang, das Originaldokument bitgenau wiederhergestellt werden kann. Auf diese Weise ist das Verfahren - im Gegensatz zu den anderen Verfahren - auch konform zu den Vorschriften des Signaturgesetzes bzw. der Signaturverordnung, die die Gerichtsverwertbarkeit der gespeicherten Emails an die nachweisliche Originalität und damit die bitgenaue Wiederherstellung knüpfen. Weiterhin ist das beschriebene Verfahren technisch vorteilhaft, weil so die Methode zur Wiederherstellung in Container ausgelagerter Emails unabhängig wird von der Verarbeitung der Emails außerhalb des Archivsystems.

Der Vorteil des Zusammenfassens der Archivdateien in eine Containerdatei besteht darin, dass die Container eine geeignete Plattform zum Deduplizieren bieten, was im Gegensatz zu Live-Daten einen erheblich geringeren Aufwand bei der Deduplizierung bedeutet. Weiterhin entlasten sie das Archiv und die Datenbank und erlauben so eine bessere Performance des Systems. Schließlich können die Daten im Container nicht mehr verändert oder aus dem Container gelöscht werden. Dies gewährleistet, dass die Integrität der Daten erhalten bleibt. Alle Daten können somit entsprechend den Anforderungen in einzelne Container ausgelagert werden. Bereits existierende qualifizierte und fortgeschrittene Signaturen sowie die optionalen fortgeschrittenen und/oder qualifizierten Zeitstempel zu jedem Dokument werden ebenfalls mit eingepackt. Diese bezeugen dann weiterhin zu jeder gespeicherten Datei deren Unverändertheit. Die einzelnen Container werden aus dem bestehenden Archiv herausgelöst und individuell gespeichert. Die Speicherung kann dabei auf unterschiedliche Speichermedien erfolgen, wie zum Beispiel externe Datenträger, die auch an einem anderen Ort gelagert werden können, solange diese nicht gebraucht werden. Somit können beispielsweise die Dateien von einem bestimmten Zeitraum, wie eines Kalenderjahres komplett ausgelagert werden, um Speicherplatz zu sparen. Dabei hat jeder Container einen eigenen Index, der die Suche und das Sortieren nach bestimmten Feldern beschleunigt, so dass gezielt auf bestimmte Daten zugegriffen werden kann.
Zusätzlich wird ein großer Vorteil durch die Verringerung der benötigten Speicherkapazität erreicht. Aufgrund der Tatsache, dass der Index sich nicht mehr verändern kann, besteht die Möglichkeit der Speicherplatzreduzierung. Dies erfolgt durch einen intelligenten Deduplizierungs-Mechanismus, bei dem auf Bitbasis die einzelnen Dokumente analysiert werden. Wird ein gleiches Bitmuster erkannt, so wird dieses in der Datenbank hinterlegt und durch einen Eintrag in dem Dokument ersetzt. Wenn beispielsweise Emails in einer Containerdatei ausgelagert werden, kann es sich durchaus um eine erheblich große Menge von kleinen Dateien handeln, die verwaltet werden müssen. Werden Emails verarbeitet, kann sich die Block-Zusammensetzung des Bitmusters verändern, so dass beispielsweise eine Leerzeile eingefügt wird. Dies wird durch den Deduplizierungs-Mechanismus erkannt, und die Daten können eindeutig zugeordnet werden.

Das erfindungsgemäße Verfahren ermöglicht damit die Herstellung und effiziente Verwaltung großvolumiger Langzeitarchive. Zudem erfüllt dieses Verfahren die Anforderungen des Signaturgesetzes und der Signaturverordnung, sowie die Anforderungen in den USA, dass bestimmte Daten erst nach drei oder sechs Jahren wieder gelöscht werden dürfen.

Zur Deduplizierung der Containerinhalte wird vorteilhafter Weise folgendes Vorgehen angewandt. Insbesondere bei E-Mails werden bevorzugt in einem ersten Schritt aus den E-Mails die Attachments entfernt bzw. referenziert (mit Beachtung der Base64-Normalform). Die Dateianhänge werden dabei im platzsparenderen Binärformat abgespeichert. Danach könnte man prinzipiell jeden Dateianhang gegen jeden anderen Dateianhang vergleichen, was jedoch ein quadratisches Ansteigen der Rechenzeit zur Folge hätte. Anschließend werden die E-Mail-Rümpfe und Bodies ausgelagert, die übriggeblieben sind nachdem insbesondere die relevanten großen Attachments abgetrennt wurden.

Hieraus ergeben sich bereits folgende Vorteile:
- Identische E-Mails/Dokumente wurden bereits auf E-Mail-Ebene und Dokumentebene dedupliziert.
- Doppelte Attachments werden nur einmal gespeichert.
- Base64 hat einen Overhead von 4/3 (3 Byte werden in 4 Zeichen gespeichert zuzüglich ein Zeilenumbruch alle ca. 76 Zeichen, also 2 Byte für den Umbruch). Das wird eingespart, wenn Attachments binär gespeichert werden.
- Base64 lässt sich zwar gut mit ZIP/LZMA, etc. um diese 4/3 komprimieren, aber die darunterliegende Binärdatei lässt sich viel besser als Binärdatei komprimieren als in Base64-Form, da jeder wiederholbare Teil an vier verschiedenen Offsets erscheinen kann.

Als weitere optionale Schritte kann man die Attachments gegen jedes andere Delta-kodieren, also nur ein Delta speichern. Ein Beispiel für eine solche Delta-Implementierung und ein standardisiertes Dateiformat (VCDIFF) findet sich in RFC 3284, welches das Speichern einer Datei als Delta gegenüber einer existierenden Datei spezifiziert (im Internet z. B. zu finden unter der Adresse http://www.faqs.org/rfcs/rfc3284.html). Da ein solches Vorgehen einen immensen Zeitaufwand erfordern würde, sortiert man vorteilhafter Weise die Anhänge anhand geeigneter Kriterien und vergleicht nur ein gleitendes Fenster von beispielsweise zehn Attachments miteinander. Im Folgenden werden die einzelnen vorteilhaften Verfahrensschritte noch näher erläutert.

Besonders vorteilhaft kann es sein, wenn zur Deduplizierung von Einträgen in der Containerdatei die Einträge zunächst nach dem Dateinamen sortiert werden und anschließend die aufeinander folgenden Einträge auf Unterschiede untersucht werden. Dadurch wird es möglich, Dateien mit wahrscheinlich ähnlichen Inhalten zusammenzufassen und die Deduplizierung auf einen gewissen Teilbereich einzuschränken. Natürlich ist es dann nicht auszuschließen, dass man einige Duplikate nicht erfasst. Dies wird jedoch durch einen beträchtlichen Performancevorteil bei der Deduplizierung aufgewogen. Besonders empfehlenswert ist ein solches Vorgehen bei Dokumentenmanagementsystemen, die entsprechend inhaltsbezogene Dateinamen generieren.

In einer besonders vorteilhaften Ausgestaltungsform werden zur Deduplizierung von Einträgen in der Containerdatei die Einträge zunächst nach Dateityp (Dateiendung) und anschließend nach dem Dateinamen und eventuell auch Informationen über den Ursprungsordner sortiert. Die aufeinander folgenden Einträge werden daraufhin auf Unterschiede untersucht, wobei die geringsten Unterschiede zwischen den Einträgen in komprimierter Form mit abgespeichert werden. Als zusätzliche Information kann ein Hash-Wert über einen Teilbereich der Informationen, beispielsweise des Betreffes einer E-Mail oder des Empfängers, berechnet werden und als Sortierkriterium verwendet werden. Als letzter Schritt werden die Einträge absteigend der Größe nach sortiert, da Deltas, die Informationen entfernen, kleiner sind und ein größerer Teil im Ursprungsanker der Deltakompression, also im Hauptdokument verbleiben, welches auf Grund seiner Größe mehr Redundanzen enthalten wird und sich somit insgesamt besser komprimieren lassen wird.

Eine weitere vorteilhafte Variante zur Deduplizierung von Einträgen in der Containerdatei ist es, die Einträge zunächst mittels einer Ähnlichkeitssuche zu sortieren und anschließend die aufeinander folgenden Einträge auf Unterschiede zu untersuchen. Das weitere Vorgehen und die erzielten Vorteile entsprechen denen der vorgenannten Sortiermethode, wobei mit der Sortierung nach einer Ähnlichkeitssuche die Wahrscheinlichkeit, einen umfassenderen Anteil der Duplikate zu erfassen, höher, dafür jedoch auch der Sortieraufwand größer ist. Für die Ähnlichkeitssuche bietet sich das in der Veröffentlichung "Optimizing File Replication over Limited-Bandwidth Networks using Remote Differential Compression" von Dan Teodosiu, Nikolaj Bjørner, Yuri Gurevich, Mark Manasse und Joe Porkka (im Internet verfügbar unter der Adresse http://research.microsoft.com/en-us/um/people/gurevich/Opera/183.pdf) beschriebene Verfahren an, das auf einer Unterteilung der zu vergleichenden Dateien in sehr kleine Teilstücke, der Bildung von Hashwerten dieser Teilstücke und dem Vergleich der erhaltenen Hashwerte beruht. Finden sich dabei Übereinstimmungen, so werden auch die Inhalte der Dateien ähnlich sein.

In einer vorteilhaften Ausgestaltung des erfindungsgemäßen Verfahrens wird die generierte Containerdatei durch Signierung gegen Veränderungen geschützt. Der Einsatz einer qualifizierten Signierung ermöglicht einen noch besseren Schutz des Containers vor unzulässigen Zugriffen. Die Anzahl der benötigten Zeitstempel wird dadurch reduziert, dass nur noch ein qualifizierter Stempel auf den gesamten Container gesetzt werden braucht. Da nach dem Signaturgesetz und der Signaturverordnung an die Ausstellung von qualifizierten elektronischen Signaturen sicherheitstechnische Mindeststandards für die Rechenzentren geknüpft sind und entsprechende Anbieter nur nach genauer Prüfung zugelassen werden, handelt es sich bei den qualifizierten Signaturdienstanbietern durchweg um kostenpflichtige Dienste. Jede eingeholte qualifizierte Signatur stellt somit einen Kostenfaktor dar. Sollen beispielsweise in einer Firma sämtliche Emails archiviert werden, kommen wirtschaftlich relevante Beträge zusammen.

In einer weiteren vorteilhaften Ausgestaltung des erfindungsgemäßen Verfahrens sind die Containerdateien als Untereinheiten unter der Hauptdatenbank für die Verwaltungs- und Suchfunktionen zu- und abschaltbar und/oder können als eigenständige Archive verwaltet und benutzt werden. Jeder Container kann dann individuell ein- bzw. ausgeschaltet werden. Der Administrator kann dadurch entscheiden, welche Daten auch später wann und wie zur Verfügung gestellt werden. Bei Bedarf kann somit die Containerdatei auf ein externes Speichermedium gespeichert werden oder in einem Netzwerk bestimmten Personen zur Verfügung stehen. Es ist zusätzlich möglich, ein Rechtesystem einzurichten, so dass genau festgelegt werden kann, welche Person(en) auf welche Container zugreifen können.

In einer weiteren vorteilhaften Ausgestaltung des erfindungsgemäßen Verfahrens wird zusätzlich ein Index für die Volltextsuche innerhalb der ausgelagerten Archivdaten erstellt und in der Containerdatei abgelegt. Für jedes Wort, außer Stoppwörter (bestimmte und unbestimmte Artikel, Präpositionen, Konjunktionen), die zur Suche eher unnütz sind, wird ein Eintrag in den Index mit der genauen Position im Datenbestand vorgenommen. Mit Hilfe einer effektiven Suchfunktion wird dann ein schnelles Durchsuchen von großen Mengen an Dateien im Container ermöglicht. Hierbei kann zusätzlich zu einer sonst etwa genutzten SQL (*Structured Query Language*)-Abfrage, die eine Kenntnis der Feldstruktur voraussetzt, auch Feld-unabhängig gesucht werden. So können beliebig komplexe Suchabfragen an die Datenbank getätigt werden und beispielsweise alle Dateien, die bestimmte Stichworte enthalten, herausgefiltert werden.

Problematisch ist hingegen, dass es möglich ist, aus dem enthaltenen Volltextindex Inhalte zu rekonstruieren. Aus diesem Grunde ist es wünschenswert diesen, und möglicherweise auch den gesamten Container zu verschlüsseln. Somit kann gemäß einer weiteren vorteilhaften Ausgestaltung des erfindungsgemäßen Verfahrens der Index für die Volltextsuche in der Containerdatei und/oder die Containerdateien mittels eines Kryptographiealgorithmuses verschlüsselt werden. Bekannte Kryptographiealgorithmen umfassen asymmetrische Verschlüsselungsalgorithmen, wie z.B. den RSA-Algorithmus, auf elliptischen Kurven basierende Verfahren, oder symmetrische Verschlüsselungsverfahren, wie z.B. Verschlüsselungsverfahren nach dem DES (*Data Encryption Standard*) oder AES (*Advanced Encryption Standard*). Durch diese weitere Verschlüsselung der Daten wird ein zusätzlicher Zugriffsschutz gewährleistet, so dass nur berechtigte Personen in der Lage sind, die Daten einzusehen.

Das Verfahren zur Verwaltung eines großvolumigen Langzeitarchivs ist für jede Art von Dateien einsetzbar. Denkbar sind Archive für Emails, die automatisch bei Ein- oder Ausgang in das Archiv aufgenommen werden können, Filearchive, die als Backuplösung funktionieren und dabei diverse Bearbeitungszustände von Dateien dokumentieren können (beispielsweise Sprachaufzeichnungen, Bildaufzeichnungen, Videoaufzeichnungen), Dokumentenarchive, die eine elektronische Aktenablage aus erstellten Text- und/oder Bilddokumenten darstellen und neben den Dokumentdateien beispielsweise auch aus den zu einem Drucker gesandten Daten erstellt werden können. Ferner sind Faxarchive oder Dokumentarchive aus gescannten Papiervorlagen möglich.

## Patentansprüche

1. Verfahren zur Herstellung und Verwaltung eines großvolumigen Langzeitarchivs, das aus einem Archivdatenspeicher, beinhaltend Archivdaten, außerdem einer Verwaltungsdatenbank, beinhaltend Indices der Archivdaten und mindestens einem externen Datenträger besteht, beinhaltend die Schritte
- Selektion von Archivdaten anhand von vorgegebenen Merkmalen;
- Auslagerung der selektierten Archivdaten aus dem Archivdatenspeicher in eine eigenständige Archivdatendatei;
- Löschen der ausgelagerten Archivdaten aus dem Archivdatenspeicher;
- Auslagerung der Indices der selektierten Archivdaten aus der Verwaltungsdatenbank in eine eigenständige Datenbankdatei;
- Löschen der ausgelagerten Indices aus der Verwaltungsdatenbank;
- Zusammenfassen der eigenständigen Archivdatendatei mit der eigenständigen Datenbankdatei in einer Containerdatei; und
- Deduplizierung von Einträgen in der Containerdatei durch Bitmustervergleich der Einträge und Ersetzen von gleichen Mustern durch Verweise auf die entsprechenden Einträge in der eigenständigen Datenbankdatei, wobei bei der Auslagerung von Emails mit MIME-kodierten Anhängen mehrfach vorhandene Anhänge derart dedupliziert werden, dass die MI-ME-Kodierung für jeden Anhang bitgenau wiederhergestellt werden kann, indem die Kodierung Zeile für Zeile auf Abweichungen von der Normalform überprüft, die Zeilenlänge gespeichert und die Rekonstruktionsinformationen für jeden deduplizierten Anhang gespeichert wird.

2. Verfahren nach Anspruch 1, **dadurch gekennzeichnet, dass** die ausgelagerten Archivdaten nicht sofort aus dem Archivdatenspeicher gelöscht werden, sondern zuvor nach Selektion anhand von weiteren Merkmalen in einen oder mehrere weitere Containerdateien ausgelagert werden, wobei die neuen Selektionen sowohl Untermengen der ersten Selektion sein können als auch neue Archivdaten beinhalten können, und erst nach Abschluss sämtlicher Auslagerungsvorgänge alle ausgelagerten Archivdaten aus dem Archivdatenspeicher gelöscht werden.

3. Verfahren nach den Ansprüchen 1 und 2, **dadurch gekennzeichnet, dass**, zur Deduplizierung von Einträgen in der Containerdatei die Einträge zunächst nach dem Dateinamen sortiert werden und anschließend die aufeinander folgenden Einträge auf Unterschiede untersucht werden.

4. Verfahren nach den Ansprüchen 1 bis 2, **dadurch gekennzeichnet, dass** zur Deduplizierung von Einträgen in der Containerdatei die Einträge zunächst mittels einer Ähnlichkeitssuche sortiert werden und anschließend aufeinander folgenden Einträge auf Unterschiede untersucht werden.

5. Verfahren nach den Ansprüchen 1 bis 4, **dadurch gekennzeichnet, dass** ein oder mehrere ausgelagerte selektierte Archivdaten durch Signierung gegen Veränderungen geschützt sind.

6. Verfahren nach den Ansprüchen 1 bis 4, **dadurch gekennzeichnet, dass** ein oder mehrere ausgelagerte selektierte Archivdaten durch eine qualifizierte Signierung gegen Veränderungen geschützt sind.

7. Verfahren nach den Ansprüchen 1 bis 6, **dadurch gekennzeichnet, dass** die generierten Containerdateien durch Signierung gegen Veränderungen geschützt sind.

8. Verfahren nach den Ansprüchen 1 bis 6, **dadurch gekennzeichnet, dass** die generierten Containerdateien durch eine qualifizierte Signierung gegen Veränderungen geschützt sind.

9. Verfahren nach den Ansprüchen 1 bis 8, **dadurch gekennzeichnet, dass** die Containerdateien als Untereinheiten unter der Hauptdatenbank für die Verwaltungs- und Suchfunktionen zu- und abschaltbar sind und/oder als eigenständige Archive verwaltet und benutzt werden können.

10. Verfahren nach den Ansprüchen 1 bis 9, **dadurch gekennzeichn t,** dass zusätzlich ein Index für eine Volltextsuche innerhalb der ausgelagerten Archivdaten erstellt und in der Containerdatei abgelegt wird.

11. Verfahren nach den Ansprüchen 1 bis 10, **dadurch gekennzeichnet, dass** der Index für die Volltextsuche in der Containerdatei und/oder die Containerdateien mittels eines Kryptographie-Algorithmus verschlüsselt werden.

12. Verfahren nach den Ansprüchen 1 bis 11, **dadurch gekennzeichnet, dass** die Archivdaten Emails, Sprachaufzeichnungen, Bildaufzeichnungen, Videoaufzeichnungen, gescannte Dokumente, Druckdateien und/oder Dateien beinhalten.

13. Verfahren nach den Ansprüchen 1 bis 11, **dadurch gekennzeichnet, dass** in der Containerdatei zusätzlich eine Verwaltungstabelle mit der Zuordnung von Benutzer-IDs zu den Emailadressen abgelegt wird, sofern es sich bei den Archivdaten um Emails handelt..

14. Verfahren nach den Ansprüchen 1 bis 13, **dadurch gekennzeichnet, dass** zur Deduplizierung der MIME-kodierten Anhänge die Anhänge zunächst nach dem Dateinamen sortiert werden und anschließend die aufeinander folgenden Einträge auf Unterschiede untersucht werden.

15. Verfahren nach einem der Ansprüche 1 bis 13, **dadurch gekennzeichnet, dass** zur Deduplizierung der MIME-kodierten Anhänge die Anhänge zunächst mittels einer Ähnlichkeitssuche sortiert werden und anschließend die aufeinander folgenden Einträge auf Unterschiede untersucht werden.

16. Langzeitarchiv, **dadurch gekennzeichnet, dass** es nach einem Verfahren nach einem der Ansprüche 1 bis 15 hergestellt ist.

## Claims

1. Method for producing and managing a large-volume long-term archive, comprising an archive data memory, comprising archive data, also a management file, comprising indices of the archive data and at least one external data carrier, comprising the following steps:
- selection of archive data by means of specified features;
- relocation of selected archive data from the archive data memory into a separate archive data memory;
- deleting the relocated archive data from the archive data memory;
- relocating the indices of the selected archive data from the management file into a separate database file;
- deleting the relocated indices from the management file;
- combining the separate archive data with the separate database file in a container file; and
- deduplication of entries in the container file by means of bit pattern comparison of the entries and replacing of identical patterns by references to the according entries in the separate database file, whereby when relocating e-mails featuring MIME-coded attachments, multiple attachments are being deduplicated in such a way that the MIME-coding can be precisely restored for each attachment. This is achieved by that the coding verifies line by line if there are any deviations from the normal form, the length of the line is being memorised and the reconstruction information for each deduplicated attachment is being memorised.

2. Method, according to claim 1, **characterised in that** the relocated archive data is not immediately deleted from the archive data memory, rather it is relocated into one or several container files after being selected on the basis of other features, whereby the new selections can be subsets of the first collection, or they can also contain new archive data and only after finishing all relocating procedures, the entire relocated archive data can be deleted from the archive data memory.

3. Method according to claims 1 and 2, **characterised in that** for the deduplication of entries in the container file, the entries are first sorted by file name and then the successive messages are examined for differences.

4. Method according to claims 1 to 2, **characterised in that** for the deduplication of entries in the container file, the entries are first sorted by means of similarity search, and then the successive messages are examined for differences.

5. Method according to claims 1 to 4, **characterised in that** one or more relocated archive data is protected by signing to change.

6. Method according to claims 1 to 4, **characterised in that** one or more relocated archive data is protected by a qualified signature to change.

7. Method according to claims 1 to 6, **characterised in that** one or more relocated archive data is protected signing to change.

8. Method according to claims 1 to 6, **characterised in that** generated container data is protected by a qualified signing to change.

9. Method according to claims 1 to 8, **characterised in that** the container files as subunits of the master database for the management and search functions can be switched to or off and/or can be managed and used as separate archives.

10. Method according to claims 1 to 9, **characterised in that** in addition an index is created for a full text search within the relocated archive data and stored in the container file.

11. Method according to claims 1 to 10, **characterised in that** the index for the full text search in the container file and /or the container files are encrypted by means of a cryptography-algorithm.

12. Method according to claims 1 to 11, **characterised in that** the archive data include e-mail, voice recordings, video recordings, scanned documents, print files and / or files.

13. Method according to claims 1 to 11, **characterised in that** a management table with the assignment of user IDs is stored to the e-mail addresses in the container file in addition, when it is in the archive data e-mails.

14. Method according to claims 1 to 13, **characterised in that** deduplication of the MIME encoded attachments, the attachments are first sorted by file name and then the successive sequenced entries are examined for differences.

15. Method according to claims 1 to 13, **characterised in that** deduplication of the MIME encoded attachments, they are first ranked by means of a similarity search and then the successive messages are examined for differences.

16. Long term archive, **characterised in that** it is produced by a process according to any one of claims 1 to 15.

## Revendications

1. Procédé de création et de gestion d'une archive longue durée de grand volume, composé d'une mémoire des données d'archive, 2 données d'archive et
une banque de données de gestion, comprenant les indices des données d'archivé et au moins un support de stockage de données, comprenant les étapes consistant à
- sélectionner des données d'archivé à l'aide de caractéristiques prédéfinies ;
- transférer les données d'archivé sélectionnées de la mémoire de données d'archivé dans un fichier autonome de données d'archive ;
- effacer de la mémoire de données d'archivé les données d'archivé transférées ;
- transférer les indices des données d'archivé sélectionnées de la banque de données de gestion dans un fichier autonome de banque de données ;
- effacer de la banque de données de gestion les indices transférés ;
- rassembler le fichier autonome de données d'archivé et le fichier autonome de la banque de données dans un fichier de conteneur ; et
- supprimer des doublons d'éléments dans le fichier de conteneur par une comparaison de motifs binaires des éléments et remplacement des motifs identiques par des renvois aux éléments correspondants dans le fichier autonome de la banque de données. Pendant le transfert des mails avec de pièces jointes encodées MIME, les doublons des pièces jointes sont supprimés, de façon que le codage MIME de chaque pièce jointe est restauré bit à bit par un procédé basé sur la vérification ligne après ligne des écarts à la forme normale, alors que la longueur de ligne, et les informations de reconstruction de chaque pièce jointe supprimée sont sauvegardés.

2. Procédé selon la revendication 1, **caractérisé en ce que** les données d'archive transférées ne sont pas effacées immédiatement de la mémoire de données d'archive, mais d'abord, après être sélectionnées à l'aide de caractéristiques prédéfinies, elles sont transférées vers un ou plusieurs fichier(s) de conteneur. De cette façon, les nouvelles sélections peuvent être constituées de sous-ensembles de la première sélection, mais aussi des nouvelles données d'archive. Sitôt finie l'opération de déstockage, la totalité des données d'archivé transférées sont effacées de la mémoire de données d'archive

3. Procédé selon l'une quelconque des revendications 1 ou 2, **caractérisé en ce que** pour la suppression d'éléments dans le fichier de conteneur, les éléments sont d'abord triés en fonction du nom du fichier, et ensuite les éléments consécutifs sont interrogés en fonction de leurs différences.

4. Procédé selon l'une quelconque des revendications 1 à 2, **caractérisé en ce que** pour la suppression d'éléments dans le fichier conteneur, les éléments sont d'abord triés par une recherche de similarité, et ensuite les éléments consécutifs sont interrogés en fonction de leurs différences.

5. Procédé selon l'une quelconque des revendications 1 à 4, **caractérisé en ce qu'**une ou plusieurs données d'archive sélectionnées sont transférées de sorte qu'elles soient protégées contre changement par une signature.

6. Procédé selon l'une quelconque des revendications 1 à 4, **caractérisé en ce qu'**une ou plusieurs données d'archive sélectionnées sont transférées de sorte qu'elles soient protégées contre changement par une signature qualifiée.

7. Procédé selon l'une quelconque des revendications 1 à 6, **caractérisé en ce que** les fichiers de conteneurs générés soient protégés contre changement par une signature.

8. Procédé selon l'une quelconque des revendications 1 à 6, **caractérisé en ce que** les fichiers de conteneurs générés soient protégés contre changement par une signature qualifiée.

9. Procédé selon l'une quelconque des revendications 1 à 8, **caractérisé en ce que,** pour les fonctions de gestion et de recherche, les fichiers de conteneurs sont activés ou désactivés comme des sous-unités de la base de données maitresse, et / ou qu'ils puissent être administrés et utilisés comme des archives autonomes.

10. Procédé selon l'une quelconque des revendications 1 à 9, **caractérisé en ce que,** un index est créé pour la recherche plein texte des données d'archive transférées, index lequel est stocké dans le fichier de conteneur.

11. Procédé selon l'une quelconque des revendications 1 à 10, **caractérisé en ce que,** l'index pour la recherche plein texte est encrypté dans le fichier ou fichiers de conteneur par le biais d'un algorithme de cryptographie.

12. Procédé selon l'une quelconque des revendications 1 à 11, **caractérisé en ce que,** les données d'archivé sont constituées des enregistrements vocaux, photographiques, vidéo, des documents scannés, des données d'imprimante et d'autres données.

13. Procédé selon l'une quelconque des revendications 1 à 11, **caractérisé en ce que** dans le fichier de conteneur est stockée une table de gestion avec l'attribution des IDs utilisateur aux adresses électroniques, pourvu que les données d'archive soient des adresses électroniques.

14. Procédé selon l'une quelconque des revendications 1 à 13, **caractérisé en ce que** pour la suppression des pièces jointes encodées MIME, les pièces jointes sont d'abord triées en fonction du nom du fichier, et ensuite les éléments consécutifs sont interrogés en fonction de leurs différences.

15. Procédé selon l'une quelconque des revendications 1 à 13, **caractérisé en ce que** pour la suppression des pièces jointes encodées MIME, les pièces jointes sont d'abord triées par une recherche de similarité, et ensuite les éléments consécutifs sont interrogés en fonction de leurs différences.

16. L'archive de longue durée, **caractérisé en ce qu'**il est créé par un procédé selon l'une quelconque des revendications 1 à 15.
